# EUROPEAN PATENT APPLICATION

(11) **EP 3 640 884 A1**
(43) Date of publication of application: **22.04.2020**
(21) Application number: 18818863.5
(22) Date of filing: 11.06.2018
(51) Int. Cl.: G06Q 50/04, G05B 19/418

(54) **MANAGEMENT DEVICE, MANUFACTURING MANAGEMENT SYSTEM, MANAGEMENT METHOD, PROGRAM AND RECORDING MEDIUM**

(30) Priority: 12.06.2017 JP 2017115351
(71) Applicant: Spiber Inc., Yamagata 997-0052 (JP)
(72) Inventor: SEKIYAMA, Kazuhide, Tsuruoka-shi Yamagata 997-0052 (JP); MEYER, Daniel, Tsuruoka-shi Yamagata 997-0052 (JP); LIOBIS, Alex, Tsuruoka-shi Yamagata 997-0052 (JP)
(74) Representative: Plougmann Vingtoft a/s
(86) International application number: PCT/JP2018/022145
(87) International publication number: WO 2018/230481

(57) **Abstract**

Provided is a management device 1 which manages the manufacturing of a product worn by a user, wherein a feature amount acquisition unit 21 acquires a plurality of feature amounts related to the body shape of the user. A mapping unit 22 maps, for each of a plurality of different users, a density distribution, specified with feature amounts of each of the plurality of different users, onto a multi-dimensional feature space in which the plurality of feature amounts are used as coordinate axes, and makes them overlap with each other. A manufacture data allocation unit 23 allocates, to each of a plurality of different points in the feature space, manufacturing data that is used for manufacturing products and corresponds to each area in the feature space including coordinates of each point. A production management unit 25 calculates the number of products manufactured by using each piece of manufacture data on the basis of the coordinates of each of the plurality of different points in the feature space and the density distributions mapped onto and overlapped with the feature space.

## Description

### TECHNICAL FIELD

The present invention relates to a management apparatus, a production management system, a management method, a program, and a recording medium, and more particularly, to a technique for managing the manufacturing of a product worn by a user.

### BACKGROUND ART

Conventionally, various technologies related to production management of products have been proposed. Patent Document 1 discloses a technique of making a production plan for each variety on the basis of a demand prediction, a variety of products, a delivery date, and the like.

### PRIOR ART

### PATENT DOCUMENT

Patent Document 1: Japanese Unexamined Patent Application Publication No. 2001-273021

### SUMMARY OF INVENTION

### PROBLEMS TO BE SOLVED BY THE INVENTION

The size and shape of a human body vary widely depending on age, gender, race, and the like. Therefore, it is ideal that products worn by users, such as a garment and shoes, are made to order according to the size of each user. However, when manufacturing the product using a manufacturing apparatus, it is practical for users with body shapes that fall within a certain range to be covered with the product in a certain size.

The narrower the range covered by the product in a certain size, the more the product fits the user's body shape, which is preferable in terms of increasing customer satisfaction. On the other hand, narrowing the range covered by the product in a certain size leads to an increase in the number of types of products, which is not preferable from the standpoint of inventory risk.

The present invention focuses on these points, and an object of the present invention is to provide a technique for balancing a variation in size of the product and the inventory risk.

### MEANS FOR SOLVING THE PROBLEMS

The first aspect of the present invention is a management apparatus for managing manufacturing of a product worn by a user. This management apparatus comprises a feature acquisition part that acquires a plurality of features relating to a body shape of the user, a mapping part that maps and superimposes, for each of a plurality of different users, a density distribution specified by a feature of the plurality of different users on a multi-dimensional feature space having the plurality of features as coordinate axes, a manufacturing data allocation part that allocates, to each of a plurality of different points in the feature space, manufacturing data used for manufacturing a product corresponding to each region in the feature space including coordinates of each point, and a production management part that calculates the number of products to be manufactured using each piece of the manufacturing data on the basis of the coordinates of each of the plurality of different points in the feature space and the density distribution mapped to and superimposed on the feature space.

The management apparatus may further comprises a region determination part that determines, on the basis of the coordinates of each of the plurality of different points in the feature space, the region corresponding to the product to be manufactured on the basis of each piece of the manufacturing data allocated to the plurality of different points.

The production management part may increase the number of products to be manufactured using the manufacturing data allocated to the region as density of the superimposed density distribution included in the region becomes higher.

The production management part may increase the number of products to be manufactured using the manufacturing data as sales of the product manufactured on the basis of the manufacturing data become larger.

The region determination part may update the region corresponding to the product to be manufactured on the basis of each of the plurality of pieces of manufacturing data in response to an update of the superimposed density distribution included in the region.

The region determination part may include an integration part that integrates a plurality of regions into one region if the density of the superimposed density distribution included in each of the plurality of regions is less than the predetermined first threshold value.

The region determination part may include a division part that divides the plurality of regions into two regions if the density of the superimposed density distribution included in the regions exceeds the predetermined second threshold value.

The region determination part may include a modification part that modifies at least one of a position, a size, or a shape of each region on the basis of the density of the superimposed density distribution included in the region.

The manufacturing data allocation part may allocate new manufacturing data to a new region generated by the region determination part updating the region.

The feature acquisition part may acquire information indicating a source of the feature relating to the body shape, and the mapping part may change the density distribution specified by the feature in the feature space on the basis of the source.

The second aspect of the present invention is a production management system that comprises the above-mentioned management apparatus, and a manufacturing apparatus that manufactures the product using the above-mentioned manufacturing data. In the production management system, the management apparatus further includes an order reception part that receives an order for the product from a user, and the production management part calculates the number of products to be manufactured by the manufacturing apparatus if the number of orders for the product received by the order reception part is less than the manufacturing capacity of the manufacturing apparatus.

The third aspect of the present invention is a management method for managing manufacturing of a product worn by a user. The method performed by a processor comprises the steps of acquiring a plurality of features relating to a body shape of the user, mapping and superimposing, for each of a plurality of different users, a density distribution specified by a feature of the plurality of different users on a multi-dimensional feature space having the plurality of features as coordinate axes, allocating, to each of a plurality of different points in the feature space, manufacturing data used for manufacturing a product corresponding to each region in the feature space including coordinates of each point, and calculating the number of products to be manufactured using each piece of the manufacturing data on the basis of the coordinates of each of the plurality of different points in the feature space and the density distribution mapped and superimposed on the feature space.

A fourth aspect of the present invention is a program. This program causes a computer for managing manufacturing of a product worn by a user to implement functions of acquiring a plurality of features relating to a body shape of the user, mapping and superimposing, for each of a plurality of different users, a density distribution specified by a feature of the plurality of different users on a multi-dimensional feature space having the plurality of features as coordinate axes, allocating, to each of a plurality of different points in the feature space, manufacturing data used for manufacturing a product corresponding to each region in the feature space including coordinates of each point, and calculating the number of products to be manufactured using each piece of the manufacturing data on the basis of the coordinates of each of the plurality of different points in the feature space and the density distribution mapped to and superimposed on the feature space.

A fifth aspect of the present invention is a non-transitory computer-readable recording medium storing a program for managing manufacturing of a product worn by a user. The program stored in the non-transitory computer-readable recording medium makes a computer perform functions of acquiring a plurality of features relating to a body shape of the user, mapping and superimposing, for each of a plurality of different users, a density distribution specified by a feature of the plurality of different users on a multi-dimensional feature space having the plurality of features as coordinate axes, allocating, to each of a plurality of different points in the feature space, manufacturing data used for manufacturing a product corresponding to each region in the feature space including coordinates of each point, and calculating the number of products to be manufactured using each piece of the manufacturing data on the basis of the coordinates of each of the plurality of different points in the feature space and the density distribution mapped to and superimposed on the feature space.

It should be noted that any combination of the above-described constituent elements, and an aspect obtained by converting the expression of the present invention among methods, apparatus, systems, computer programs, data structures, recording media, and the like are also effective as an aspect of the present invention.

### EFFECT OF THE INVENTION

According to the present invention, it is possible to balance the variation in size of the product and the inventory risk.

### BRIEF DESCRIPTION OF THE DRAWINGS

FIG. 1 is a diagram for explaining an outline of a management apparatus according to the embodiment.
FIG. 2 shows an example of a product order screen displayed on a user terminal according to the embodiment.
FIG. 3 is a diagram schematically showing a multi-dimensional feature space having a plurality of features as coordinate axes.
FIG. 4 is a diagram schematically showing a functional configuration of the management apparatus according to the embodiment.
FIG. 5 is a diagram schematically showing an overview of a density distribution specified by the plurality of features.
FIG. 6 is a diagram schematically showing a data structure of a body shape database for storing body shape information acquired by a feature acquisition part.
FIG. 7 is a diagram schematically showing the density distribution mapped and superimposed on a feature space.
FIG. 8 is a diagram schematically showing a relationship between points to which manufacturing data is allocated and regions including each point in the feature space.
FIG. 9 is a diagram schematically showing the data structure of the sales performance database.
FIG. 10 is a schematic diagram showing, in a bar graph format, the quantity of production calculated by a production management part according to the embodiment.
FIG. 11 is a diagram schematically showing the functional configuration of a region determination part according to the embodiment.
FIG. 12 is a diagram for explaining integration processing of regions performed by an integration part according to the embodiment.
FIG. 13 is a diagram for explaining division processing of a region performed by a division part according to the embodiment.
FIG. 14 is a diagram for explaining modification processing of regions performed by a modification part according to the embodiment.
FIG. 15 is a flowchart for explaining processing of the management method executed by the management apparatus according to the embodiment.

### DETAILED DESCRIPTION OF THE INVENTION

### <Outline of the embodiment

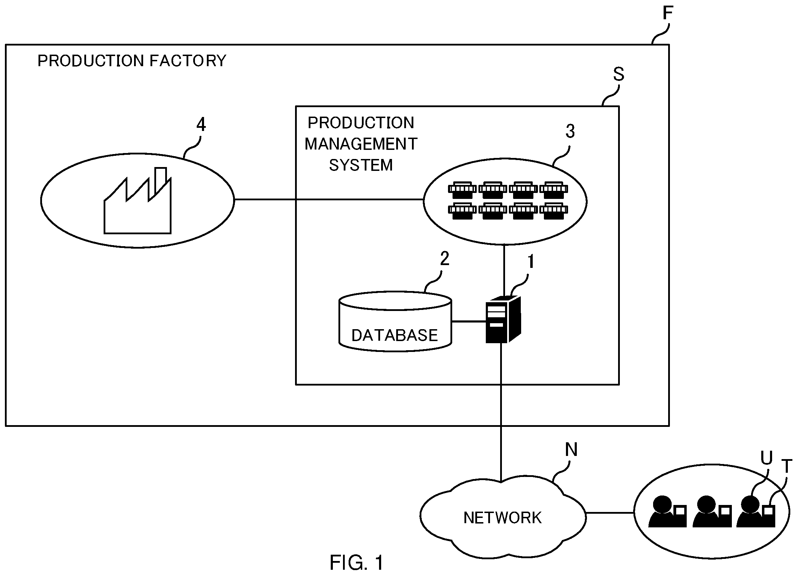

An outline of the embodiment will be described while referencing FIGS. 1, 2, and 3.

FIG. 1 is a diagram for explaining an outline of a management apparatus 1 according to the embodiment. The management apparatus 1 according to the embodiment is a part of a production management system S including the management apparatus 1, a database 2, and a manufacturing apparatus 3. The production management system S constitutes a production factory F together with a plant 4.

The management apparatus 1 can mutually communicate with a user terminal T owned by a user U who is an orderer of a product handled by the management apparatus 1 via a network N such as the Internet. The database 2 is a database for storing body shape information of a wearer (i.e. someone who wears the product handled by the management apparatus 1) who resides in a sales area of the product manufactured by the manufacturing apparatus 3. The manufacturing apparatus 3 is an apparatus for manufacturing the product worn by the wearer. The product worn by the wearer includes a garment such as a sweater, underwear, a knit hat, socks, and gloves, and footwear such as shoes and sandals. Here, the wearer of the product may be the user U, or may be a person different from the user U (for example, a family member, a friend, an acquaintance, or the like of the user U).

The plant 4 produces raw materials for the manufacturing apparatus 3 to manufacture the product. By way of illustration, but not limitation, the manufacturing apparatus 3 is a seamless knitting machine capable of knitting a garment three-dimensionally in one entire piece. In this case, the plant 4 may be a plant that produces fibers and the like made of structural proteins as raw materials for the manufacturing apparatus 3 to manufacture the product.

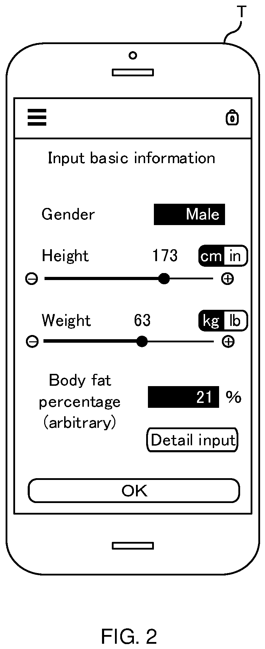

FIG. 2 shows an example of a product order screen displayed on the user terminal T according to the embodiment. More specifically, FIG. 2 shows an example of an input screen of the body shape information indicating the body shape of the wearer who wears the product. On the body shape information input screen, the user U can input information concerning the body shape of the wearer of the product. In FIG. 2, the user U inputs, as information concerning the body shape of the wearer of the product, information indicating that the gender of the wearer is male, the height is 173 centimeters, the weight is 63 kilograms, and the body fat percentage is 21%.

If the user U taps a "detail input" icon on the product order screen shown in FIG. 2, the screen of the user terminal T transitions to a detail input screen, which is not shown in the figures. In the detail input screen, the user U can input a plurality of pieces of information relating to the body shape such as the wearer's neck circumference, chest circumference, abdominal circumference, arm length, foot length, shoe size, and the like.

It should be noted that the user U does not have to be the only person who performs input in the product order screen shown in FIG. 2. For example, it is also conceivable that a salesperson of an apparel and accessories store affiliated with a manager of the management apparatus 1 inputs a value obtained by measuring the wearer's body shape into the product order screen. The information in this case is considered to have higher reliability as information than the information inputted by the user U to the product order screen. The body shape information inputted to the body shape information input screen or the detail input screen is stored in the database 2 in association with the user U.

The management apparatus 1 according to the embodiment acquires a plurality of pieces of information regarding the wearer's body shape from the user terminal T of the user U. The management apparatus 1 maps the acquired information into a multi-dimensional feature space having the plurality of features as coordinate axes, where the plurality of features correspond to the acquired information.

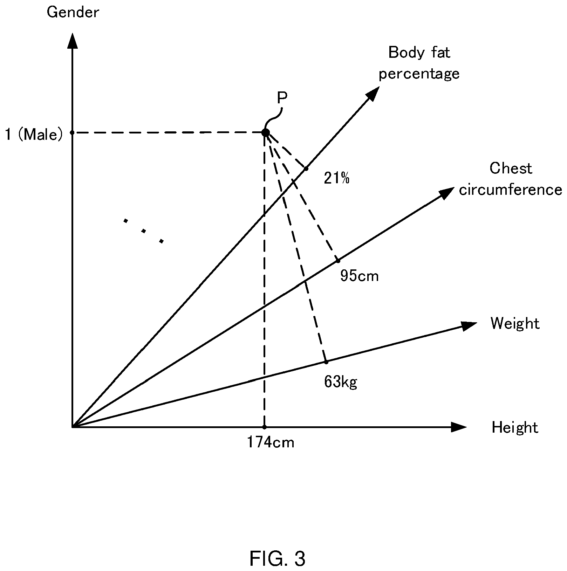

FIG. 3 is a diagram schematically showing the multi-dimensional feature space having the plurality of features as the coordinate axes. FIG. 3 shows a state in which a point P is mapped in the multi-dimensional feature space having the features including gender, body fat percentage, chest circumference, weight, and height as the coordinate axes. As shown in FIG. 3, the point P is represented by the coordinate axis indicating the gender having the value 1, the coordinate axis indicating the body fat percentage having the value 21, the coordinate axis indicating the chest circumference having the value 95, the coordinate axis indicating the weight having the value 63, and the coordinate axis indicating the height having the value 174. Though not shown in FIG. 3, there may be a type of feature other than gender, body fat percentage, chest circumference, weight, and height.

In this manner, any one point in the feature space corresponds to the wearer's body shape on a one-to-one basis. The management apparatus 1 maps information acquired from a plurality of different users U to the feature space, thereby forming a heat map indicating the distribution of the body shapes of the users U in the multi-dimensional space. A region having a high density of the distribution of the body shapes of the users U in the multi-dimensional space can be considered to mean that there is a great demand for the product having a size corresponding to this region.

In addition, the management apparatus 1 allocates, to each of a plurality of different points in the feature space, manufacturing data used for manufacturing the product corresponding to each region including coordinates of each of these points. Here, the "manufacturing data" is data for the manufacturing apparatus 3 to refer to in order to manufacture a product having a size fitting the body shape corresponding to the allocated point. In a case where the manufacturing apparatus 3 is a seamless knitting machine, for example, the "manufacturing data" is knitting data for the manufacturing apparatus 3 to refer to in order to knit the product having the size fitting the body shape corresponding to the allocated point.

The product manufactured by using the manufacturing data allocated to a certain point can be said to be a product that only fits the body shape corresponding to that point, theoretically. Actually, however, due to errors and variations in manufacturing of the product, physical fluctuations such as expansion and contraction of the raw material, and subjective fluctuations such as preferences of the wearer, the product manufactured according to the manufacturing data allocated to the certain point becomes a product corresponding to the size corresponding to the region including said certain point in the multi-dimensional space.

Therefore, the management apparatus 1 according to the embodiment calculates, on the basis of the density in the heat map indicating the distribution of the body shapes of the users U mapped to the regions in the feature space including the points to which the respective pieces of manufacturing data are allocated, the number of products to be manufactured using the respective pieces of manufacturing data. As a result, the management apparatus 1 can balance the variation in size of the product and the inventory risk. In other words, even if the number of pieces of manufacturing data arranged in the feature space is increased in order to increase the variation of details, the number of each product to be manufactured according to each piece of the manufacturing data can be accurately estimated, and therefore, the inventory risk can be reduced.

### <Functional configuration of the management apparatus 1>

Hereinafter, the management apparatus 1 according to the embodiment will be described in more detail.

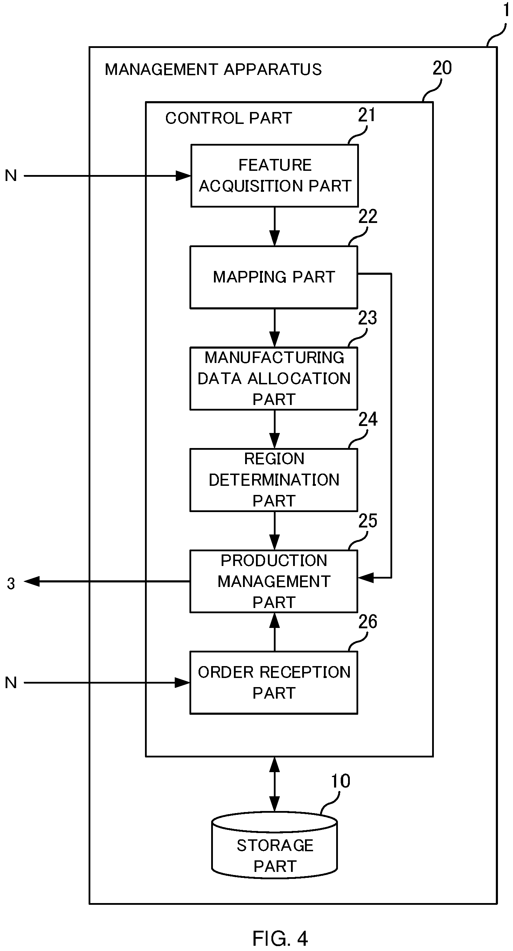

FIG. 4 is a diagram schematically showing a functional configuration of the management apparatus 1 according to the embodiment. The management apparatus 1 according to the embodiment includes a storage part 10 and a control part 20.

FIG. 4 shows the functional configuration for realizing a function of managing the manufacturing of the product by the management apparatus 1 according to the embodiment, and omits other configurations. In FIG. 4, each element described as a functional block for performing various types of processing can be configured by a central processing unit (CPU), a graphics processing unit (GPU), a main memory, and other large scale integration (LSI) in terms of hardware. In terms of software, these elements are realized by a program or the like loaded into the main memory. Therefore, it is understood by those skilled in the art that these functional blocks can be realized in various forms only by hardware, only by software, or by a combination thereof, and the present invention is not limited to any of them.

The storage part 10 is a large-capacity storage device such as a read only memory (ROM) that stores a basic input output system (BIOS) of a computer that realizes the management apparatus 1, a random access memory (RAM) that becomes a working area of the management apparatus 1, and a hard disk drive (HDD) or a solid state drive (SSD) that stores an operating system (OS), an application program, or various kinds of information that is referred to when the application program is executed.

The control part 20 is a processor such as a CPU and a GPU of the management apparatus 1, and functions as a feature acquisition part 21, a mapping part 22, a manufacturing data allocation part 23, a region determination part 24, a production management part 25, and an order reception part 26 by executing programs stored in the storage part 10.

The feature acquisition part 21 acquires a plurality of features relating to the user U's body shape from the user terminal T of the user U via the network N. The mapping part 22 maps and superimposes, for each of a plurality of different users, a density distribution specified by the features of the plurality of different users on the multi-dimensional feature space having the plurality of features as the coordinate axes.

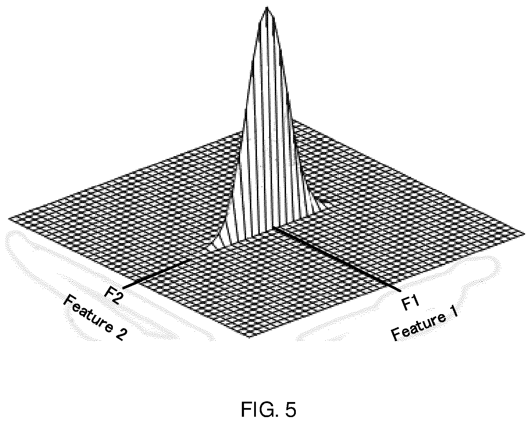

FIG. 5 is a diagram schematically showing an overview of the density distribution specified by the plurality of features of one user U. The feature acquired by the feature acquisition part 21 is categorized in various features, such as gender, body fat percentage, chest circumference, weight, height, and the like, but for convenience of illustration, FIG. 5 shows the density distribution projected onto a two-dimensional feature space spanned by the two coordinate axes of a "feature 1" and a "feature 2."

As described referring to FIG. 2, the feature acquisition part 21 acquires the plurality of features relating to the user U's body shape from the user terminal T. Here, it is not always expected that all the users U input values accurately for all the features. For example, as shown in FIG. 2, the input of the body fat percentage is arbitrary, and not all the users U necessarily input this value.

The mapping part 22 estimates, on the basis of the feature of the information that has been acquired, a value of a feature of information that has not been acquired among the plurality of features relating to the user U's body shape. For example, in FIG. 5, it is assumed that the value F2 of the feature 2 is the value inputted by the user U. Therefore, the density distribution shown in FIG. 5 does not have a spread in the axial direction for the feature 2. On the other hand, it is assumed that the user U has not inputted a value for the feature 1. Therefore, the mapping part 22 refers to the feature 2 of the user U, for which the value is inputted, and estimates the density distribution that is a distribution of the feature 1 of other users U whose feature 2 value is also F2.

More specifically, the mapping part 22 calculates the average value A1 and the variance σ1 of the feature 1 of the other users U whose feature 2 values are F2, and treats a normal distribution specified by the average value A1 and the variance σ1 as the density distribution. Therefore, as shown in FIG. 5, the density distribution has a spread in the axial direction of the feature 1.

For convenience of illustration, FIG. 5 shows the distribution projected onto the two-dimensional feature space spanned by the two coordinate axes of the feature 1 and the feature 2, but the mapping part 22 maps a multi-dimensional density distribution onto a multi-dimensional feature space having a plurality of other features as axes. Therefore, in addition to the feature 2, the mapping part 22 may estimate a feature for which no value is inputted on the basis of a feature for which a value is inputted.

For example, it is assumed that the feature 1 is the body fat percentage and the feature 2 is the weight. It is also assumed that the user U has also inputted information concerning height, gender, and age. In this instance, the mapping part 22 may generate the density distribution by calculating the average value A1 and the variance σ1 of the body fat percentage of the other users U having the same height, weight, gender, and age as those inputted by the user U and use the average value A1 as an estimated value.

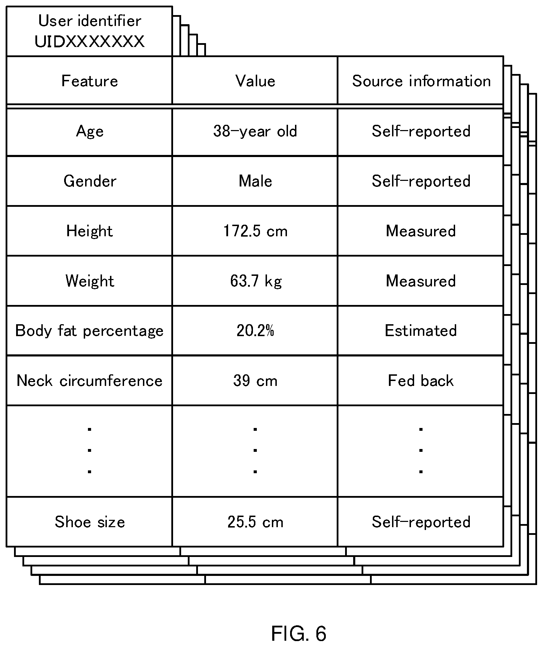

FIG. 6 is a diagram schematically showing a data structure of a body shape database for storing the body shape information acquired by the feature acquisition part 21. The body shape database is stored in the database 2, and is managed by the feature acquisition part 21. A user identifier for uniquely specifying each user U is assigned to the user U who accesses the management apparatus 1 using the user terminal T.
The body shape database stores the body shape information indicating the user U's body shape for each user identifier assigned to each user U.

FIG. 6 exemplifies the body shape information of the user U whose user identifier is UIDXXXXXXX. The user U, whose user identifier is UIDXXXXXXX, is 38 years old, male in gender, and 172.5 centimeters tall. As shown in FIG. 6, the body shape database also stores source information indicating the source of each feature. For example, it is indicated that the age of the user U whose user identifier is UIDXXXXXXX is in accordance with a self-report by the user U and the value of the height is in accordance with the actually measured data. Further, it is indicated that the body fat percentage is an estimated value estimated by the mapping part 22. By referring to the body shape database, the mapping part 22 can calculate the average value and the variance of the features that have not been inputted by the user U, and can specify the density distribution.

As described above, the source information can be considered to be information indicating the reliability of the feature. For example, a feature obtained from a salesperson of a store "measuring" the user U can be said to be highly reliable information. On the contrary, a feature, for which no value is inputted by the user U, obtained by "estimation" based on other features can be said to be information that is slightly less reliable than that obtained by "measurement."

In addition, a feature that is once inputted by the user U and then fed back by the user U can also be said to be highly reliable information. The reliability of the feature is greatly improved if the feature obtained by the "estimation" is inputted by the feedback of the user U.

Therefore, the feature acquisition part 21 acquires the feature as well as the source information indicating the source of the feature relating to the body shape. The mapping part 22 changes, on the basis of the source of the feature, the shape of the density distribution specified by the feature in the feature space. This makes it possible to reflect the unreliability based on the source of the feature in the shape of the density distribution in the feature space.

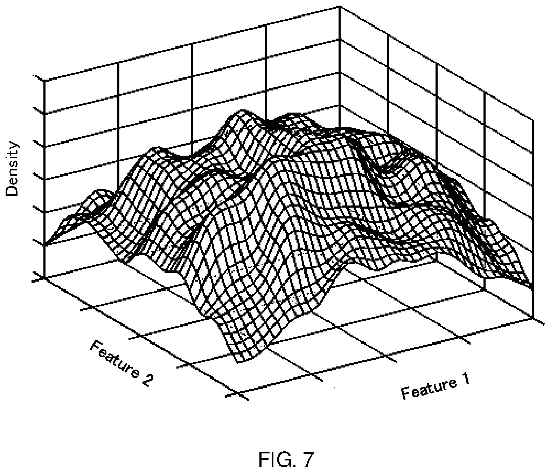

FIG. 7 is a diagram schematically showing the density distribution mapped and superimposed on the feature space. For convenience of illustration, FIG. 7 shows the density distribution projected onto the two-dimensional feature space spanned by the two coordinate axes of the feature 1 and the feature 2, and the vertical axis represents density. In FIG. 7, a region having a large value on the vertical axis indicates that there are many users U having the body shape specified by the feature. In other words, a region having a large value on the vertical axis can be said to have a high potential demand for the product that fits the size specified by that feature.

Returning to the description of FIG. 4. The manufacturing data allocation part 23 allocates, to each of a plurality of different points in the feature space, the manufacturing data used for manufacturing the product corresponding to each region in the feature space including the coordinates of each point. Here, the "region including the point to which the manufacturing data is allocated" indicates what we might call a "scope of the manufacturing data." That is, the product having a size corresponding to the point in the region including the point to which manufacturing data is allocated is manufactured on the basis of the manufacturing data allocated in the region.

The region determination part 24 determines, on the basis of the coordinates of each of the plurality of different points in the feature space, the region corresponding to the product to be manufactured on the basis of respective pieces of the manufacturing data allocated to the plurality of different points.

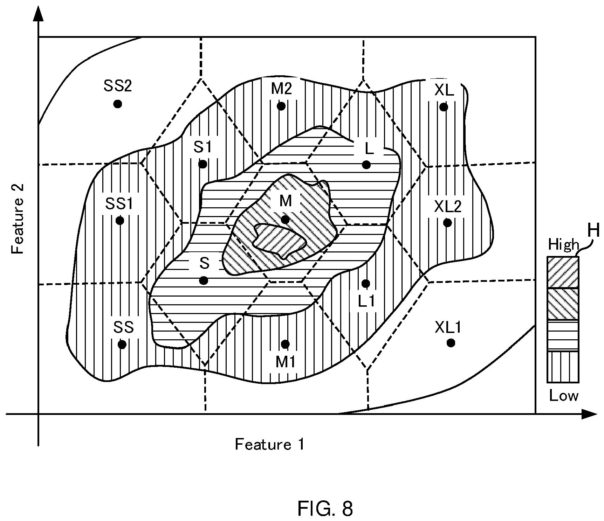

FIG. 8 is a diagram schematically showing a relationship between points to which the manufacturing data is allocated and the regions including each point in the feature space. For convenience of illustration, FIG. 8 shows the points and the regions projected onto the two-dimensional feature space spanned by the two coordinate axes of the feature 1 and the feature 2.

In FIG. 8, a black dot indicates a point to which manufacturing data is allocated. Also, an alphabet character or combination of an alphabet character and a number written together in the vicinity of each point indicates the size of the product to be manufactured according to the manufacturing data allocated to this point. For example, the manufacturing data used for manufacturing a so-called "M-size" product is allocated to the point where "M" is written nearby. For convenience of description, in the following specification, the point where "M" is written nearby may be referred to as a point M, a point where "SS2" is written nearby may be referred to as a point SS2, and the like.

In FIG. 8, a broken line indicates the regions in which the manufacturing data allocated to the respective points is used for manufacturing. For example, in FIG. 8, the region in which the manufacturing data allocated to the point M is used for manufacturing has a hexagonal shape. For convenience of description, in the following specification, the region including the point M may be referred to as a "region M," a region including a point XL may be referred to as a "region XL," and the like.

As described above, the region determination part 24 determines each region on the basis of the coordinates of each point to which the manufacturing data is allocated in the feature space. In the example shown in FIG. 8, the region determination part 24 determines each region by performing the known Voronoi tessellation having each point as a kernel point. The region obtained by performing the Voronoi tessellation is a region obtained as a result of dividing the feature space from the viewpoint of which kernel point (i.e., the point to which the manufacturing data is allocated) is the closest. In other words, the distance between a point included in a certain region and the kernel point of the region including said point is shorter than the distance between said point and any other kernel point. Here, the "distance" is not limited to the Euclidean distance in the multi-dimensional space, and may be any distance that satisfies the theorem of distance.

In FIG. 8, the density distribution is shown by hatching. As shown by a hatching label H, the density is highest in the vicinity of the point M in FIG. 8. Further, a point S and a point L have substantially the same density. The integrated value of the density distribution included in a region S and the integrated value of the density distribution included in a region L are substantially the same, and they are smaller than the integrated value of the density distribution included in the region M. This indicates that the M-size product is in greater demand than an S-size product and an L-size product.

Therefore, the production management part 25 calculates the number of products to be manufactured using the each piece of manufacturing data on the basis of the coordinates of each of the plurality of different points in the feature space and the density distribution mapped to and superimposed on the feature space. More specifically, the production management part 25 increases the number of products to be manufactured using the manufacturing data allocated to the region as the density of the superimposed density distribution included in the region increases. As a result, the production management part 25 can calculate the production quantity in accordance with the actual demand.

Here, the production management part 25 may calculate the production quantity in consideration of not only the density distribution in the feature space, but also the sales performance of the products in the past.

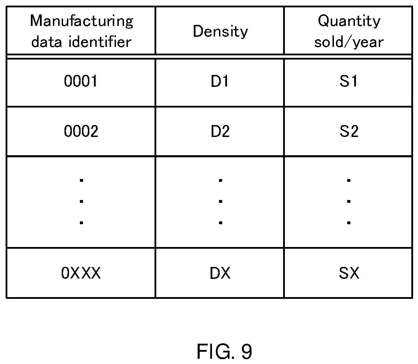

FIG. 9 is a diagram schematically showing the data structure of the sales performance database. The sales performance database is a database that stores the manufacturing data, the integrated value of the density distribution in the region including the point to which the manufacturing data is allocated, and the annual sales of the products manufactured using the manufacturing data in association with each other. The sales performance database is stored in the database 2, and is managed by the production management part 25.

A manufacturing data identifier for uniquely specifying the manufacturing data is assigned to each piece of the manufacturing data. In the sales performance database, a density, which is the integrated value of the density distribution, and the annual sales are associated with each manufacturing data identifier. For example, the integrated value of the density distribution in the region to which the manufacturing data identifier 0001 is assigned is D1, and the annual sales are S1. The production management part 25 may reference the sales performance database and increase the number of products to be manufactured using the manufacturing data as the sales of the product manufactured on the basis of the manufacturing data become larger.

Specifically, when the integrated value of the density distribution in the region to which certain manufacturing data is allocated is D and the annual sales are S, the production management part 25 calculates the quantity of production P as P=α×D×S. Here, α is a proportionality coefficient referenced by the production management part 25 for calculating the quantity of production P. The specific value of α may be determined in consideration of the production capacity and the like of the manufacturing apparatus 3. As is clear from the derivation equation of the quantity of production P, the larger the integrated value D of the density distribution in the region to which the certain manufacturing data is allocated, the larger the quantity of production P. In addition, the larger the past sales of the product manufactured using the certain manufacturing data, the larger the quantity of production P.

Here, the order reception part 26 receives an order for the product from the user U. The production management part 25 accumulates the number of orders received by the order reception part 26 on a yearly basis, thereby obtaining past sales of the product manufactured using the certain manufacturing data.

Generally, the number of orders for the product, such as a garment and shoes, is not uniform throughout the year. For example, the number of orders for sweaters and cardigans increases at the beginning of autumn and winter, and then returns to normal, but increases again in early spring. Therefore, the operation rate of the manufacturing apparatus 3 is not uniform throughout the year, and there is a busy period and a quiet period.

Accordingly, the production management part 25 calculates the quantity of production P, which is the number of products to be manufactured by the manufacturing apparatus 3, if the number of orders for the product received by the order reception part 26 is less than the manufacturing capacity of the manufacturing apparatus 3. As a result, the manufacturing apparatus 3 can manufacture the product that is expected to be sold at a time when there is a margin in the manufacturing capacity and hold them as inventory. Since the inventory held in advance can be sold during the busy period in which the number of orders exceeds the manufacturing capacity of the manufacturing apparatus 3, it is possible to suppress missing a sales opportunity. Further, the operation rate of the manufacturing apparatus 3 can be leveled, and therefore the manager of the production factory F can improve the efficiency of capital investment.

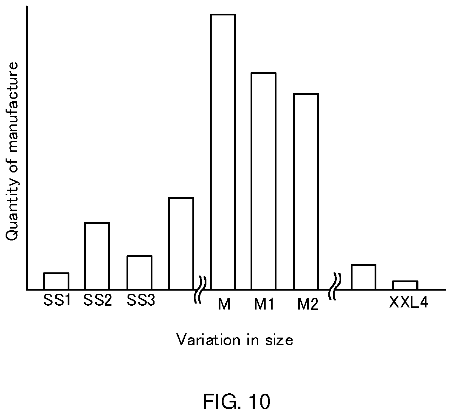

FIG. 10 is a schematic diagram showing, in a bar graph format, the quantity of production P calculated by the production management part 25 according to the embodiment. In the graph shown in FIG. 10, the horizontal axis represents a variation relating to the size of the product manufactured by the manufacturing apparatus 3, and the vertical axis represents the quantity of production P calculated by the production management part 25. In the example shown in FIG. 10, the quantity of production of the M-size product is the largest. The production management part 25 periodically calculates the quantity of production at a predetermined time, such as at the beginning of the fiscal year. Accordingly, the manager of the production factory F can formulate an annual plan for the product to be manufactured by the manufacturing apparatus 3.

The case where the production management part 25 calculates the number of sales on the basis of the density distribution mapped in the multi-dimensional feature space having the plurality of features as the coordinate axes has been described above. Here, the density distribution that the production management part 25 uses as a basis for calculating the number of sales changes every time a feature is inputted or updated by the user U.

Therefore, the region determination part 24 may reorganize the region, which is the scope of the manufacturing data, after the density distribution is updated. Specifically, the region determination part 24 updates the region corresponding to the product to be manufactured on the basis of each of the plurality of pieces of manufacturing data in response to the update of the superimposed density distribution included in the region. Hereinafter, the reorganization of the region by the region determination part 24 will be described.

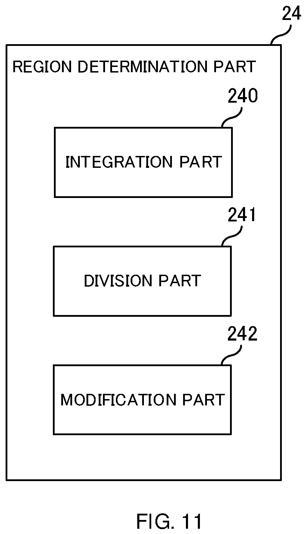

FIG. 11 is a diagram schematically showing a functional configuration of the region determination part 24 according to the embodiment. The region determination part 24 includes an integration part 240, a division part 241, and a modification part 242.

### [Integration of the regions]

The integration part 240 integrates a plurality of regions into one region if the density of the superimposed density distribution included in the regions is less than the predetermined first threshold value. For example, the density distribution based on the body shape information of a certain user changes when the user U provides the feedback regarding the feature. If there is a change in the density distribution for a plurality of users U, the density distribution in the feature space also changes as a result.

If the body shape of the user U deviates from the average value, such as when the user U is a large person, the density of the feature space corresponding to the body shape of said user U is low. A change in the density distribution of such a user U may cause the density of the superimposed density distribution in the peripheral region to fall below the predetermined first threshold value. The product corresponding to such a region can be said to be a product with low demand from the beginning.

Therefore, from the standpoint of inventory risk management, the integration part 240 integrates regions covering the products with low demand. In this sense, the "first threshold value" is an "integration determination criterion density" that the integration part 240 references in order to determine whether or not to integrate the plurality of regions. The integration determination criterion density may be determined in consideration of the sales performances and the like corresponding to the regions before integration.

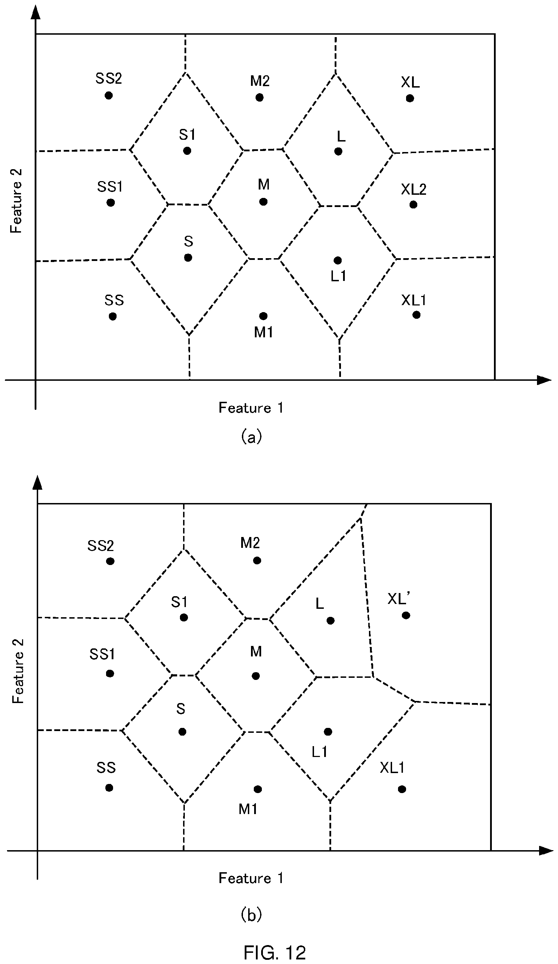

FIGS. 12(a) and 12(b) are diagrams for explaining integration processing performed on the regions by the integration part 240 according to the embodiment. Specifically, FIG. 12(a) is a diagram showing the regions before the integration performed by the integration part 240, and FIG. 12(b) is a diagram showing the regions after a region XL and a region XL2 are integrated by the integration part 240.

As shown in FIG. 12(b), the integration part 240 integrates the region XL and the region XL2 into a new region XL'. The manufacturing data allocation part 23 allocates new manufacturing data to the new region generated by the integration part 240 integrating and updating the regions.

More specifically, the integration part 240 first makes a determination to integrate the region XL and the region XL2. Upon receiving the determination of the integration part 240, the manufacturing data allocation part 23 sets the midpoint between a point XL and a point XL2 as a point XL' to which new manufacturing data is allocated, and deletes the point XL and the point XL2. The integration part 240 performs the Voronoi tessellation using the new point as a kernel point. As a result, the region XL and the region XL2 are integrated to generate the new region XL'. As shown in FIG. 12(b), the size and shape of a region M2, a region L, a region L1, and a region XL1 adjoining the region XL' are also changed.

Accordingly, the manufacturing data allocation part 23 can allocate new manufacturing data having the region integrated by the integration part 240 as the scope. Although the satisfaction level of the user U with respect to the product may be lowered because the region of the manufacturing data is widened, the product corresponding to the region integrated by the integration part 240 can be said to be a product with low demand from the beginning. Therefore, the integration part 240 can reduce the inventory risk by integrating the regions.

### [Division of the region]

The division part 241 divides a plurality of regions into two regions if the density of the superimposed density distribution included in the regions exceeds the predetermined second threshold value. For example, the density of the region corresponding to the M-size body shape is high. When the order reception part 26 receives an order from a new user U, the user U has a high probability of being M-size, and as a result, the density of the region corresponding to the M-size body shape may increase with time.

Here, since the manufacturing data is associated with one point in the feature space, the product manufactured by using each piece of the manufacturing data best matches the body shape corresponding to the point associated with the manufacturing data. Therefore, it is considered that the smaller the region in which the manufacturing data is used for manufacturing, the higher the satisfaction level of the user U who purchases the product corresponding to the region.

Hence, if the density of the superimposed density distribution included in the region exceeds the predetermined second threshold value, the division part 241 divides the plurality of regions into two regions, thereby increasing the degree of customer satisfaction for the product manufactured by the manufacturing apparatus 3. In addition, since the division part 241 divides a region having density exceeding the second threshold value, it is ensured that the density of this region after the division is equal to or higher than a certain value. As a result, the inventory risk can be reduced.

Accordingly, the "second threshold value" is a "division determination criterion density" which the division part 241 refers to in order to determine whether or not to divide a region. The division determination criterion density may be determined in consideration of the sales performances and the like corresponding to each region after the division.

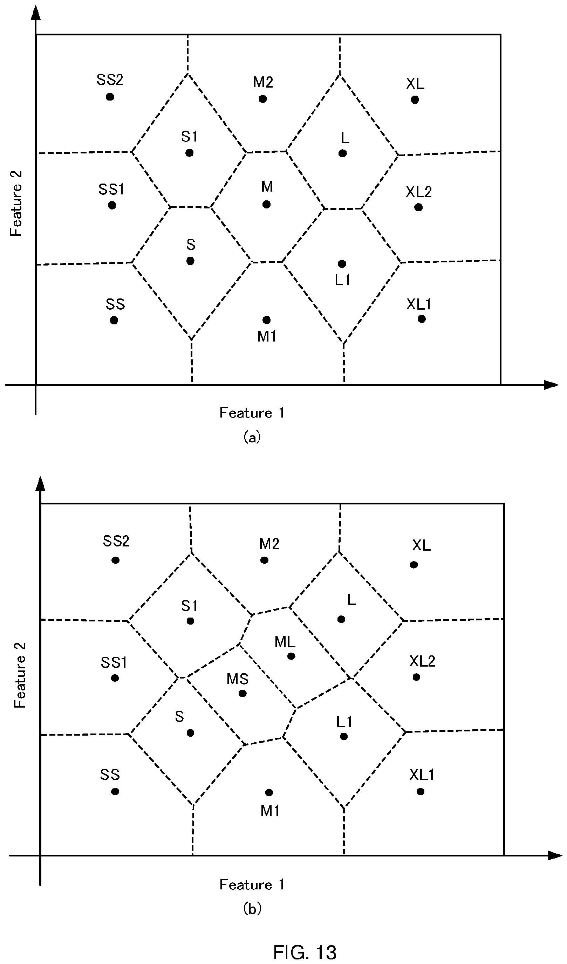

FIGS. 13(a) and 13(b) are diagrams for explaining division processing performed on a region by the division part 241 according to the embodiment. Specifically, FIG. 13(a) is a diagram showing the regions before the division performed by the division part 241, and FIG. 13(b) is a diagram showing the regions after the region M is divided by the division part 241.

As shown in FIG. 13(b), the division part 241 divides the region M to generate two new regions MS and ML. The manufacturing data allocation part 23 allocates new manufacturing data to the new regions generated by the division part 241 dividing and updating the regions.

More specifically, the division part 241 first makes a determination to divide the region M. The manufacturing data allocation part 23 receives the determination of the division part 241, allocates new manufacturing data to new points MS and ML in the region M, and deletes a point M. The division part 241 performs the Voronoi tessellation with the new points as kernel points. As a result, the region M is divided into two regions, which are the region MS and the region ML. As shown in FIG. 13(b), the sizes and shapes of the region S1, the region M2, the region L, the region L1, the region M1, and the region S which were adjoining the region M are also changed. As a result, the manufacturing data allocation part 23 can allocate new manufacturing data having the region divided by the division part 241 as the scope.

### [Modification of the region]

The modification part 242 modifies at least one of the position, size, and shape of each region on the basis of the density of the superimposed density distribution included in the region. For example, in the example shown in FIG. 8, the region M including the point M to which the manufacturing data is allocated for manufacturing the M-size product includes the region having the highest density. However, the point M itself is not included in the region having the highest density.

In such a case, the modification part 242 moves the point M to the region with the highest density. Therefore, the result of the Voronoi tessellation is also changed, and as a result, the position, size, or shape of each region is also changed.

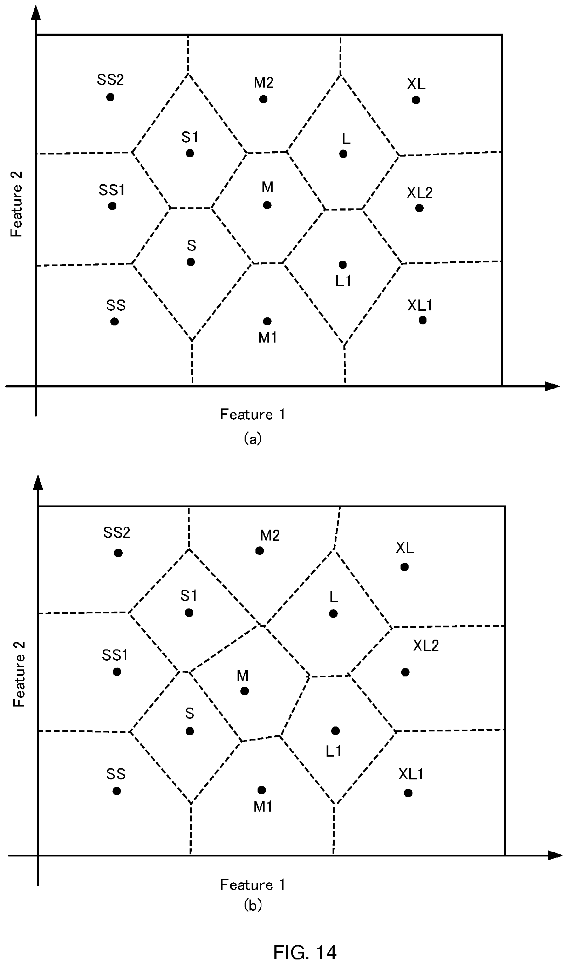

FIGS. 14(a) and 14(b) are diagrams for explaining modification processing performed on the regions by the modification part 242 according to the embodiment. Specifically, FIG. 14(a) is a diagram showing the regions before the modification performed by the modification part 242, and FIG. 14(b) is a diagram showing the regions after the region M is modified by the modification part 242.

As shown in FIG. 14(b), the modification part 242 moves the point M in the direction of the point S so that the point M is included in the region with the highest density. The manufacturing data allocation part 23 allocates new manufacturing data to a new region generated by the modification part 242 updating the region.

More specifically, the modification part 242 first makes a determination to modify the region M. The manufacturing data allocation part 23 moves the point M in response to the determination of the modification part 242. The modification part 242 performs the Voronoi tessellation using the new point as a kernel point. As a result, the sizes and shapes of the region M and the regions S1, M2, L, L1, M1, and S adjoining the region M are also changed. Since the point to which the manufacturing data is allocated is moved to the region having high density, the degree of customer satisfaction for the product can be increased. Further, it is also possible to manufacture, while the operation rate of the manufacturing apparatus 3 is low, a product that is expected to be demanded.

<Processing of management method performed by the management apparatus 1 according to the embodiment>

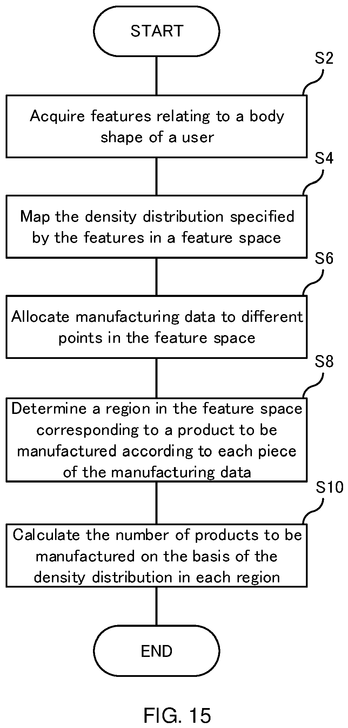

FIG. 15 is a flow chart for explaining processing of the management method performed by the management apparatus 1 according to the embodiment. The processing in this flowchart starts when, for example, the management apparatus 1 is started.

The feature acquisition part 21 acquires the plurality of features relating to the user U's body shape from the user terminal T of the user U via the network N (step S2). The mapping part 22 maps the density distribution specified by the feature acquired by the feature acquisition part 21 to the multi-dimensional feature space having the plurality of features as the coordinate axes (step S4).

The manufacturing data allocation part 23 allocates, to each of the plurality of different points in the multi-dimensional feature space, the manufacturing data used for manufacturing the product corresponding to each region including the coordinates of each point (step S6). The region determination part 24 determines the region in the feature space corresponding to the product to be manufactured by using each piece of the manufacturing data allocated to each point in the feature space (step S8).

The production management part 25 calculates the number of products to be manufactured using each piece of the manufacturing data on the basis of the density distribution in the region in which the manufacturing data allocated to each point in the feature space is used for manufacturing (step S10). After the production management part 25 calculates the number of products, the processing in this flowchart ends.

### <Effects of the management apparatus 1 according to the embodiment>

As described above, according to the management apparatus 1 according to the embodiment, it is possible to balance the variation in size of the product and the inventory risk.

In particular, since the production management part 25 calculates the quantity of production of the product on the basis of the density distribution superimposed on the feature space, potential demand can be reflected in the quantity of production. As a result, the inventory risk of products can be reduced.

In addition, the region determination part 24 determines, on the basis of the position coordinates of the plurality of pieces of manufacturing data arranged at each point in the feature space, the region in the feature space in which each piece of the manufacturing data is used for manufacturing, and therefore the manufacturing apparatus 3 can manufacture the product having a size closest to the size of the user U.

The production management part 25 increases the number of products to be manufactured corresponding to the region as the density of the region is higher and the past sales becomes greater. As a result, the production management part 25 can provide information for formulating a production plan of the product that meets actual demand.

When the density distribution is updated in the feature space, the region determination part 24 reorganizes the regions covered by each piece of manufacturing data. As a result, the production management part 25 can calculate the quantity of production while adapting the product that the production factory F manufactures to the variations of the body shapes of the users U.

The present invention is explained on the basis of the exemplary embodiments. The technical scope of the present invention is not limited to the scope explained in the above embodiments and it is possible to make various changes and modifications within the scope of the invention. For example, the specific embodiments of the distribution and integration of the apparatus are not limited to the above embodiments, all or part thereof, can be configured with any unit which is functionally or physically dispersed or integrated. Further, new exemplary embodiments generated by arbitrary combinations of them are included in the exemplary embodiments of the present invention. Further, effects of the new exemplary embodiments brought by the combinations also have the effects of the original exemplary embodiments.

In the above description, the region determination part 24 is described mainly as determining each region by using the Voronoi tessellation in which the coordinates of each point to which the manufacturing data is allocated are used as a kernel point in the feature space. Alternatively, the region determination part 24 may set each region as a super-rectangular parallelepiped in the dimensionality of the feature space. In this instance, the region determination part 24 may arrange each super-rectangular parallelepiped in such a manner that each super-rectangular parallelepiped always includes one point to which manufacturing data is allocated, and the region to which the density distribution is mapped in the feature space is dense with a plurality of super-rectangular parallelepipeds.

### [Description of the reference numerals]

- 1: management apparatus
- 2: database
- 3: manufacturing apparatus
- 4: plant
- 10: storage part
- 20: control part
- 21: feature acquisition part
- 22: mapping part
- 23: manufacturing data allocation part
- 24: region determination part
- 25: production control part
- 26: order reception part
- 240: integration part
- 241: division part
- 242: modification part
- F: production factory
- N: network
- S: production management system
- T: user terminal

## Claims

1. A management apparatus for managing manufacturing of a product worn by a user, the management apparatus comprising:
a feature acquisition part that acquires a plurality of features relating to a body shape of the user;
a mapping part that maps and superimposes, for each of a plurality of different users, a density distribution specified by a feature of the plurality of different users on a multi-dimensional feature space having the plurality of features as coordinate axes;
a manufacturing data allocation part that allocates, to each of a plurality of different points in the feature space, manufacturing data used for manufacturing a product corresponding to each region in the feature space including coordinates of each point; and
a production management part that calculates the number of products to be manufactured using each piece of the manufacturing data on the basis of the coordinates of each of the plurality of different points in the feature space and the density distribution mapped to and superimposed on the feature space.

2. The management apparatus according to claim 1, further comprising:
a region determination part that determines, on the basis of the coordinates of each of the plurality of different points in the feature space, the region corresponding to the product to be manufactured on the basis of each piece of the manufacturing data allocated to the plurality of different points.

3. The management apparatus according to claim 2, wherein
the production management part increases the number of products to be manufactured using the manufacturing data allocated to the region as density of the superimposed density distribution included in the region becomes higher.

4. The management apparatus according to claim 3, wherein
the production management part increases the number of products to be manufactured using the manufacturing data as sales of the product manufactured on the basis of the manufacturing data become larger.

5. The management apparatus according to any one of claims 2 to 4, wherein
the region determination part updates the region corresponding to the product to be manufactured on the basis of each of the plurality of pieces of manufacturing data in response to an update of the superimposed density distribution included in the region.

6. The management apparatus according to claim 5, wherein
the region determination part includes an integration part that integrates a plurality of regions into one region if the density of the superimposed density distribution included in each of the plurality of regions is less than the predetermined first threshold value.

7. The management apparatus according to claim 5 or 6, wherein
the region determination part includes a division part that divides the plurality of regions into two regions if the density of the superimposed density distribution included in the regions exceeds the predetermined second threshold value.

8. The management apparatus according to any one of claims 5 to 7, wherein
the region determination part includes a modification part that modifies at least one of a position, a size, or a shape of each region on the basis of the density of the superimposed density distribution included in the region.

9. The management apparatus according to any one of claims 5 to 8, wherein
the manufacturing data allocation part allocates new manufacturing data to a new region generated by the region determination part updating the region.

10. The management apparatus according to any one of claims 1 to 9, wherein
the feature acquisition part acquires information indicating a source of the feature relating to the body shape, and
the mapping part changes the density distribution specified by the feature in the feature space on the basis of the source.

11. A production management system comprising:
the management apparatus according to any one of claims 1 to 10; and
a manufacturing apparatus that manufactures the product using the manufacturing data, wherein
the management apparatus further includes an order reception part that receives an order for the product from a user, and
the production management part calculates the number of products to be manufactured by the manufacturing apparatus if the number of orders for the product received by the order reception part is less than the manufacturing capacity of the manufacturing apparatus.

12. A management method for managing manufacturing of a product worn by a user, the method performed by a processor comprising the steps of:
acquiring a plurality of features relating to a body shape of the user;
mapping and superimposing, for each of a plurality of different users, a density distribution specified by a feature of the plurality of different users on a multi-dimensional feature space having the plurality of features as coordinate axes;
allocating, to each of a plurality of different points in the feature space, manufacturing data used for manufacturing a product corresponding to each region in the feature space including coordinates of each point; and
calculating the number of products to be manufactured using each piece of the manufacturing data on the basis of the coordinates of each of the plurality of different points in the feature space and the density distribution mapped and superimposed on the feature space.

13. A program that causes a computer for managing manufacturing of a product worn by a user to implement functions of:
acquiring a plurality of features relating to a body shape of the user;
mapping and superimposing, for each of a plurality of different users, a density distribution specified by a feature of the plurality of different users on a multi-dimensional feature space having the plurality of features as coordinate axes;
allocating, to each of a plurality of different points in the feature space, manufacturing data used for manufacturing a product corresponding to each region in the feature space including coordinates of each point; and
calculating the number of products to be manufactured using each piece of the manufacturing data on the basis of the coordinates of each of the plurality of different points in the feature space and the density distribution mapped to and superimposed on the feature space.

14. A non-transitory computer-readable recording medium storing a program for managing manufacturing of a product worn by a user, the program for making a computer perform functions of:
acquiring a plurality of features relating to a body shape of the user;
mapping and superimposing, for each of a plurality of different users, a density distribution specified by a feature of the plurality of different users on a multi-dimensional feature space having the plurality of features as coordinate axes;
allocating, to each of a plurality of different points in the feature space, manufacturing data used for manufacturing a product corresponding to each region in the feature space including coordinates of each point; and
calculating the number of products to be manufactured using each piece of the manufacturing data on the basis of the coordinates of each of the plurality of different points in the feature space and the density distribution mapped to and superimposed on the feature space.
